# EUROPEAN PATENT SPECIFICATION

(11) **EP 2 430 687 B1**
(45) Date of publication and mention of the grant of the patent: **21.10.2015**
(21) Application number: 10718652.0
(22) Date of filing: 07.05.2010
(51) Int. Cl.: H01M 4/38, H01M 4/62, H01M 4/134, H01M 10/0525, H01M 4/1395

(54) **A BINDER FOR LITHIUM ION RECHARGEABLE BATTERY CELLS**
BINDER FÜR LITHIUM-IONEN-AKKUMULATORZELLEN
LIANT POUR DES CELLULES DE BATTERIE RECHARGEABLE LITHIUM-ION

(30) Priority: 11.05.2009 GB 0908089
(43) Date of publication of application: 21.03.2012
(73) Proprietor: Nexeon Limited, Abingdon, Oxfordshire OX14 4SB (GB)
(72) Inventor: LOVERIDGE, Melanie J, Abingdon Oxfordshire OX14 3EQ (GB)
(74) Representative: Greenaway, Martin William
(86) International application number: PCT/GB2010/000922
(87) International publication number: WO 2010/130975

(56) References cited:
- JP-A- 2008 034 266
- US-A1- 2005 079 414
- US-A1- 2006 051 670
- US-A1- 2010 092 868

## Description

### Technical Field

The invention relates to lithium ion rechargeable battery cells and especially to a binder for use in such cells.

### Background Art

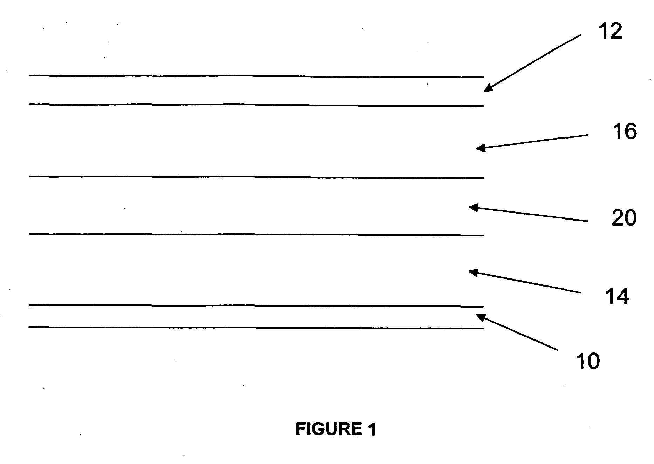

Lithium-ion rechargeable battery cells currently use a carbon/graphite-based anode. The basic composition of a conventional lithium-ion rechargeable battery cell including a graphite-based anode electrode is shown in Fig. 1. A battery may include a single cell but may also include more than one cell.

The battery cell generally comprises a copper current collector 10 for the anode and an aluminium current collector 12 for the cathode, which are externally connectable to a load or to a recharging source as appropriate. It should be noted that the terms "anode" and "cathode" are used in the present specification as those terms are understood in the context of batteries placed across a load, i.e. the term "anode" denotes the negative pole and the term "cathode" the positive pole of the battery. A graphite-based composite anode layer 14 overlays the current collector 10 and a lithium containing metal oxide-based composite cathode layer 16 overlays the current collector 12. A porous plastic spacer or separator 20 is provided between the graphite-based composite anode layer 14 and the lithium containing metal oxide-based composite cathode layer 16: a liquid electrolyte material is dispersed within the porous plastic spacer or separator 20, the composite anode layer 14 and the composite cathode layer 16. In some cases, the porous plastic spacer or separator 20 may be replaced by a polymer electrolyte material and in such cases the polymer electrolyte material is present within both the composite anode layer 14 and the composite cathode layer 16.

When the battery cell is fully charged, lithium has been transported from the lithium containing metal oxide via the electrolyte into the graphite-based anode where it is intercalated by reacting with the graphite to create a lithium carbon compound, typically LiC₆. The graphite, being the electrochemically active material in the composite anode layer, has a maximum capacity of 372 mAh/g.

It is well known that silicon can be used instead of graphite as the active anode material (see, for example, Insertion Electrode Materials for Rechargeable Lithium Batteries, M. Winter, J. O. Besenhard, M. E. Spahr, and P.Novak in Adv. Mater. 1998, 10, No. 10). It is generally believed that silicon, when used as an active anode material in a lithium-ion rechargeable cell, can provide a significantly higher capacity than the currently used graphite. Silicon, when converted to the compound Li₂₁Si₅ by reaction with lithium in an electrochemical cell, has a maximum theoretical capacity of 4,200 mAh/g, considerably higher than the maximum capacity for graphite. Thus, if graphite can be replaced by silicon in a lithium rechargeable battery, a substantial increase in stored energy per unit mass and per unit volume can be achieved. Unfortunately silicon anode material in Li-ion cells undergoes a huge volume change (up to 300%) between the charged and the discharged states associated with the insertion and removal of lithium ions into the silicon material during the charging and discharging stages of the cells. This is much larger than the volume change seen in carbon anodes.

Carbon black is often added to silicon anodes to increase the conductivity within the electrode.

In both carbon anodes and silicon anodes, the anode material is particulate and the particulate mass is held together in the anode by a binder. It has proved more problematic to find a binder for silicon anodes than for carbon anodes because of this large volume change, which can result in individual silicon particles not always re-establishing electrical contact with each other and with a current collector when the silicon anode shrinks due to the removal of lithium ions during discharging. Therefore the teaching of binders for carbon anodes is not transferrable to silicon anodes.

Polyvinylidene fluoride (PVDF) and styrene butadiene rubber (SBR) are the most commonly used binders in lithium-ion rechargeable battery cells using a graphite-based anode, but other binders have been suggested, for example US-5660948 discloses the following binders in a carbon anode of a lithium ion cell: ethylene-propylenediene termonomer, PVDF, ethylene-acrylic acid copolymer and ethylene vinyl acetate copolymer. US-6399246 teaches that poly(acrylic acid) does not provide good adhesive properties in graphite anodes of lithium-ion battery cells and claims the use of a polyacrylamide binder.

US-6620547 discloses a lithium secondary cell having a carbon anode in which lithium may be intercalated and a cathode formed from a transition metal held on a matrix polymer including materials such as polyacrylate, poly(acrylic acid), polymethylmethacrylate, poly(vinyl pyrrolidone), polyacrylonitrile, poly(vinylidene fluoride) and poly(vinyl chloride).

The use of cellulose binders in the fabrication of anodes is known, See, for example, US 20100085685.

US5260148 discloses a lithium secondary cell having an anode formed from a lithium salt that is held together by a binder, which may be starch, carboxymethyl cellulose (CMC), diacetyl cellulose, hydroxypropyl cellulose, ethylene glycol, poly(acrylic acid), polytetrafluoroethylene and poly(vinylidene fluoride).

As mentioned above, the most common binders used in graphite anodes of lithium ion cells are PVDF and SBR but they do not bind silicon anode material together cohesively over successive charging cycles due to the relatively large volume changes of silicon anodes.

An alternative binder that has been proposed for silicon systems is sodium carboxymethylcellulose (NaCMC), see:
(i) Journal of Applied Electrochemistry (2006) 36:1099-1104 (which is primarily concerned with anodes where the active material is a Si/C composite);
(ii) Electrochemical and Solid State Letters, 10 (2) A17-A20 (2007); and
(iii) Electrochemical and Solid State Letters, 8 (2) A100-A103 (2005)

These papers demonstrate that the use of sodium CMC results in an improved cycle life over the 'standard' PVdF binder when using micron scale powdered Si anode materials or Si/C composite anode material.

Hitherto, the silicon that has been used in the fabrication of lithium secondary cells has been silicon of the type generally used to fabricate integrated circuit (IC) Si-wafers which has a high purity. However, such silicon is very expensive. In an effort to reduce the cost of the electrodes cheaper, lower grade silicon has been tried but it was found that the resulting electrode mass was unstable and, as a consequence, the resulting anode material, when coated on a current collector, did not retain sufficient contact with the current collector and only underwent a limited number of discharge / recharge cycles, before losing its capacity to hold a charge.

We have found that the lack of stability can be ascribed to certain impurities in the silicon that interact with the NA-CMC. A subsequent search of the literature has reinforced that conclusion since Die Angewandte Makromolekulare Chemie 220 (1994) 123-132 (Nr. 3848) discloses that the viscosity of Na-CMC decreases in the presence of calcium and aluminium ions.

The use of lower grade metallurgical silicon in the manufacture of cellulose based, particularly CMC based electrodes therefore represents a problem because the metallic impurities present in the silicon interact with the cellulose, particularly CMC binder leading to a loss of stability within the electrode. The present invention addresses that problem.

US 2005/0079414 describes a method of producing an active material for a lithium ion battery by precipitating metal ions in solution that are stabilised by a complexing agent to form an amorphous alloy that includes at least one metal capable of being electrochemically alloyed with lithium.

US 2006/0051670 describes a method of refining cheap silicon before it is incorporated into a lithium ion battery.

### Disclosure of the Invention

In addition to addressing the problem outlined above, it is an object of the present invention to find a binder that can satisfactorily bind together particulate silicon material having differing purities and especially silicon particles made of the relatively cheap "lower grade" silicon in the anode material of a rechargeable lithium ion cell. For example, a relatively cheap form of silicon is Silgrain J230 silicon powder, which has a mean particle diameter of 4.5[mu]m and comprises one of the Silgrain HQ products, which is commercially available from Elkem of Norway, and which contains the following impurities in the following amounts:
Aluminium up to 0.12 %
Iron (ferric) up to 0.05 %
Calcium up to 0.02%
Titanium up to 0.005%
All percentages given in the present specification are expressed as wt% and based, where appropriate, on dry weights.

Surprisingly, it has been found that sodium carboxymethyl cellulose (NaCMC) (and other cellulose based binders, particularly carboxymethyl celluloses having alternative cations, e.g. other alkali metals), can still be used to form part or the whole of the binder for lower grade silicon (less than 99.90% pure) in the anode of a rechargeable lithium ion cell by incorporating a chelating agent, typically a divalent and/or trivalent chelating agent, into the anode material. Other multivalent chelating agents such as tetravalent, pentavalent and hexavalent chelating agents may be used. The present invention can also be used with high purity (99.90% pure or above) silicon.

Aspects of the present invention are set out in the independent claims. Preferred embodiments of these aspects are set out in the dependent claims.

Also described is an electrode for a lithium ion rechargeable battery cell as defined in claim 6.

The binder can be any cellulose binder that is known to be suitable for inclusion in electrode structures. Examples of such binders are disclosed in US 20100085685 and include methyl cellulose, cellulose sulphate, methylethylcellulose, hydroxyethylcellulose and methyl hydroxypropyl cellulose. Other suitable cellulose binders include binders comprising anionic carboxymethylcellulose, e.g. sodium carboxymethylcellulose. In a preferred embodiment of the first aspect of the invention, the binder is an anionic carboxymethylcellulose, especially sodium carboxymethylcellulose.

The silicon in the electrode could be any suitable form. The particulate silicon is suitably provided in the form of particles, fibres, sheet-like, pillar-like or ribbon-like particles (as described in WO2008/139157) or pillared particles. Fibres can be made using the techniques disclosed in WO2007/083152 WO2007/083155 and WO 2009/010758. Pillared particles are silicon particles on which pillars have been etched using the techniques disclosed in WO2009/010758. Fibres may be obtained by severing the pillars from pillar particles, e.g. using sonification.

For reasons of cost, the silicon used in the present invention is preferably the cheaper silicon having a purity of 99.80% or less, e.g. 99.7% or less, rather than the high purity (and hence more expensive) silicon powder having a purity of at least 99.99% or at least 99.999%. However, the levels of impurities that give rise to problems is believed to be partly determined by the surface area of the silicon probably because a larger surface area leads to an increase in the presence of the impurities at the surface. Therefore it is impossible to give an exact cut-off point between silicon purity levels that will suffer from the above problem and those that will not. Other factors may also be at work.

Nevertheless, the purity of the silicon material should generally be greater than 95.00% in order to ensure that there is sufficient silicon to intercalate the lithium and preferably the purity is greater than 98%. The silicon may include a wide range of impurities, principally iron, aluminium, calcium, titanium, phosphorous and boron, oxygen and/or carbon present in an amount of up to about 0.2% each, but generally within the range set out in the table below.

Chemical analysis of Silgrain HQ (the brand that J230 grade belongs to) from a batch analysis reported as below

| Analysis: | Si wt% | Fe wt% | Al wt% | Ca wt% | Ti wt% |
|---|---|---|---|---|---|
| Max | 99,7 | 0,05 | 0,12 | 0,02 | 0,003 |
| Min | 99,6 | 0,03 | 0,09 | 0,01 | 0,001 |
| Typical | 99,6 | 0,04 | 0,11 | 0,02 | 0,0021 |

The silicon particles may be crystalline for example mono- or poly-crystalline. The polycrystalline particle may comprise any number of crystals for example two or more.

The present invention also has application when other materials within a rechargeable cell having a silicon anode give rise to metallic impurities; for example any carbon black present in the silicon anode to increase the conductivity of the anode. Carbon black typically includes impurities such as iron, which may be in the ferrous or ferric form or both.

The silicon suitably comprises between 20 and 100% of the active material in the electrode. Other active materials may also be included. Examples of active materials that can be used in combination with the silicon include graphite and hard carbon. By the term "active material" it should understood to mean (in the context of lithium ion batteries) a material, which is able to incorporate lithium into and release lithium from its structure respectively during the charging and discharging cycles of the battery. In one embodiment of the first aspect of the invention the electrode comprises 20 to 100% silicon and 0 to 80% of an active material selected from graphite and hard carbon or a mixture thereof. Preferably the active material comprises from 60 to 97% by weight silicon and from 3 to 40% by weight of graphite or hard carbon or a mixture thereof.

The anode material referred to above suitably comprises an active material as described above (e.g. silicon and optionally graphite and/or hard carbon) and a conductive material. Examples of suitable conductive materials include carbon black, acetylene black, ketjen black, channel black; conductive fibres such as carbon fibres (including carbon nanotubes).

The anode material, together with the binder forms a cohesive mass which adheres to the substrate, e.g. current collector, the cohesive mass will generally be in electrical contact with the current collector.

The cohesive mass referred to above suitably comprises 50 to 95% active material, preferably 60 to 90% and especially 70 to 80%.

The cohesive mass suitably comprises 10 to 30% conductive carbon, preferably 8 to 20% and especially 12 to 14%.

The cohesive mass suitably comprises 2 to 20% by weight binder, preferably 8 to 15% by weight and especially 8 to 12% by weight binder. Binder contents of 12% are most preferred. Binder contents of 2 -12 wt%, e.g. 5-10 wt.% are also envisaged.

The chelating agents are preferably suitable for chelating trivalent ions, e.g. Fe³⁺ and Al³⁺ and/or divalent ions e.g. Ca²⁺ and Ti²⁺; preferred chelating agents include deferoxamine mesylate, which is a trivalent chelating compound suitable for chelating Fe³⁺ and Al³⁺, EDTA (ethylenediaminetetraacetic acid), which is a general purpose divalent chelator suitable for chelating Ca²⁺ and Co²⁺ and sodium hexametaphosphate (SHMP), which is used as a dispersant and sequestering agent in the water and food industries.

The chelating agent is combined with the anode material (Silicon and optionally other active or conductive materials). The resulting chelating agent/anode material mix can be combined with the cellulose binder in forming the cohesive mass that adheres to the substrate. Alternatively a slurry of the active material in a solution of the chelating agent can be mixed for a predetermined time until the level of impurities in the active materials has reached an acceptable level; the active material can then be separated from the slurry, washed and dried before being mixed with the cellulose binder to form a cohesive mass. It will be appreciated that in the former case, the chelating agent will be included in the electrode structure, whereas in the latter (alternative) case it will not.

The active material comprising silicon and optionally the conductive material is typically formed into a slurry with an aqueous solution of the chelating agent and stirred for 12 hours. The resulting mixture is then centrifuged for 20 minutes to separate the active material and optionally conductive material. The active material and optionally conductive material is rinsed three times in deionized water (1 L for every 100g Si). Final separation is carried out in a Buchner funnel apparatus. The silicon in the resulting product typically has a purity of >99%.

In either case, the amounts of the chelating agents present in an anode (either as the slurry mix used to prepare the anode material or in the resulting dried composite electrode after processing) should be sufficient to bind substantially all the cationic impurities. It will generally be necessary to match the valency of the chelating agents with the valency of the impurity.

The chelating agent must itself be stable to the electrochemical environment within a Li-ion cell and for example not interact with other species such as those present in the electrolyte for example lithium ions themselves.

The invention also provides in a second aspect a method of fabricating an electrode, as defined in claim 1.

The substrate is preferably a copper current collector. The active material suitably comprises silicon and may optionally comprise other active materials such as graphite or hard carbon or a mixture thereof. Suitable conductive materials include carbon black, acetylene black, ketjen black, channel black; conductive fibres such as carbon fibres (including carbon nanotubes).

Examples of suitable chelating agents are disclosed herein above. The chelating agent is typically provided in the form of a solution and the active material comprising silicon and any conductive material present is dispersed therein to form a slurry. The resulting slurry is then combined with the cellulose binder to form a cohesive mass that can be applied to the substrate, e.g. a current collector.

In a preferred embodiment of the second aspect of the invention, the active material comprising silicon and optionally the conductive material is separated from the chelating agent between steps (c) and (d). The solution containing the chelating agent is discarded and the active material and optionally conductive material is washed and dried before mixing with the binder in step (d).

### Preparation of Sodium Carboxymethylcellulose Solutions

Two solutions of metallurgical grade silicon powder in aqueous solutions of sodium carboxymethylcellulose were prepared.

### Solution A

80 parts by weight of a metallurgical grade silicon powder (Silgrain HQ (J230) from Elkem of Norway having an average particle size of 4.5µm) was dispersed in 20 parts by weight of a 1% aqueous solution of sodium carboxy methylcellulose having a molecular weight of 700,000.

### Solution B

80 parts by weight of a metallurgical grade silicon powder (Silgrain HQ (J230) from Elkem of Norway having an average particle size of 4.5µm) was dispersed in 20 parts by weight of an aqueous solution comprising 1% by weight sodium carboxy methylcellulose having a molecular weight of 700,000 and 1 % by weight sodium hexametaphosphate.

The viscosity of the sodium carboxymethylcellulose solutions before and after the addition of the sodium powder was determined. The results are presented in Table 1 below:

| Initial Viscosity of NaCMC of solution mPa/s | | Final Viscosity of NaCMC solution after addition of Silicon mPa/s | |
|---|---|---|---|
| Solution A | 340 | Solution A | 20 |
| Solution B +(SHMP) | 340 | Solution B | 75 |

It can be seen that the viscosity of the sodium carboxymethylcelullose solution for solutions containing the sodium hexametaphosphate is reduced by a much smaller amount compared to solutions in which the hexametaphosphate is absent. This means that dispersions of silicon in solutions of sodium carboxymethylcellulose containing sodium hexametaphosphate are more stable than dispersions in solutions of carboxymethylcellulose in which sodium hexametaphosphate is absent.

## Claims

1. A method of fabricating an electrode comprising the steps of:
a. providing a substrate;
b. providing an active material comprising a particulate silicon;
c. mixing a chelating agent with the active material comprising particulate silicon;
d. either
(i) mixing the product of step (c) comprising the active material and chelating agent with a cellulose binder to form a cohesive mass; or
(ii) separating the active material from the chelating agent, washing and drying the active material and then mixing the active material with a cellulose binder to form a cohesive mass; and
e. applying the cohesive mass formed in step d(i) or step d(ii) to the substrate.

2. A method according to claim 1, wherein the active material further comprises a conductive material.

3. A method according to claim 1 or claim 2, wherein the active material comprises one or metallic impurities.

4. A method according any one of claims 1 to 3, wherein the silicon has a purity of greater than 95wt%.

5. A method according to any one of the preceding claims, wherein the particulate silicon includes up to 0.2wt% of one or more impurities selected from iron, aluminium, boron, calcium, titanium, phosphorous, boron, oxygen and carbon.

6. An electrode for a lithium ion rechargeable battery cell comprising:
a. a substrate;
b. an active material comprising a particulate silicon and metallic impurities;
c. a chelating agent; and
d. a cellulose binder, the binder forming with the active material and the chelating agent a cohesive mass that adheres to the substrate;
wherein
e. the chelating agent is capable of binding to the metallic impurities.

7. An electrode according to claim 6, wherein the particulate silicon has a purity of greater than 95wt%.

8. An electrode according to claim 6 or claim 7, wherein the particulate silicon includes up to 0.2wt% each of an impurity selected from iron, aluminium, boron, calcium and titanium.

9. An electrode according to claim 8, wherein in respect of chelating agents having any given valency, the concentration of the chelating agent is sufficient to bind the impurities that have a corresponding valency.

10. An electrode according to any one of claims 6 to 9, wherein the silicon has a purity of less than 99.99wt%.

11. An electrode according to any one of claims 6 to 10, wherein the cellulose binder is an anionic carboxymethylcellulose.

12. An electrode according to any one of claims 6 to 10, wherein the chelating agent is selected from one or more of a divalent, trivalent or a multivalent chelating agent.

13. An electrode according to claim 12, wherein the chelating agent is selected from deferroxamine mesylate, ethylenediaminetetraacetic acid (EDTA) and sodium hexametaphosphate.

14. An electrode according to any one of claims 6 to 13, which further comprises an electrically conductive carbon.

15. An electrode according to claim 14, wherein the conductive carbon includes metallic impurities.

16. An electrode according to any one of claims 6 to 15, wherein the active material comprises 20 to 100wt% silicon and 0 to 80wt% of a active carbon.

17. An electrode according to any one of claims 6 to 16, wherein the cohesive mass comprises 50 to 95wt% of an active material, 5 to 20wt% of a binder and 10 to 30wt% of a conductive carbon.

18. An electrode according to any one of claims 6 to 17, wherein the particulate silicon is selected from one or more of pillared particles, powder particles, ribbons and fibres.

19. A lithium ion rechargeable battery cell comprising an electrode according to any one of claims 6 to 18.

20. A device comprising a cell according to claim 19.

## Patentansprüche

1. Verfahren zum Herstellen einer Elektrode, umfassend folgende Schritte:
a. Bereitstellen eines Substrats;
b. Bereitstellen eines aktiven Materials, das Siliciumpartikel umfasst;
c. Mischen eines Chelatbildners mit dem aktiven Material, das Siliciumpartikel umfasst;
d. entweder
(i) Mischen des Produkts aus Schritt (c), das das aktive Material und den Chelatbildner umfasst, mit einem Cellulosebindemittel, um eine kohäsive Masse zu bilden; oder
(ii) Trennen des aktiven Materials vom Chelatbildner, Waschen und Trocknen des aktiven Materials und dann Mischen des aktiven Materials mit einem Cellulosebindemittel, um eine kohäsive Masse zu bilden; und
e. Aufbringen der in Schritt d(i) oder Schritt d(ii) gebildeten kohäsiven Masse auf das Substrat.

2. Verfahren nach Anspruch 1, wobei das aktive Material des Weiteren ein leitendes Material umfasst.

3. Verfahren nach Anspruch 1 oder Anspruch 2, wobei das aktive Material eine oder metallische Unreinheiten umfasst.

4. Verfahren nach einem der Ansprüche 1 bis 3, wobei das Silicium eine Reinheit von mehr als 95 Gewichts-% hat.

5. Verfahren nach einem der vorhergehenden Ansprüche, wobei die Siliciumpartikel bis zu 0,2 Gewichts-% einer oder mehrerer Unreinheiten aufweisen, ausgewählt aus Eisen, Aluminium, Bor, Calcium, Titan, Phosphor, Bor, Sauerstoff und Kohlenstoff.

6. Elektrode für eine Lithiumionen-Akkuzelle, umfassend:
a. ein Substrat;
b. ein aktives Material, das Siliciumpartikel und metallische Unreinheiten umfasst;
c. einen Chelatbildner; und
d. ein Cellulosebindemittel, wobei das Bindemittel mit dem aktiven Material und dem Chelatbildner eine kohäsive Masse bildet, die an dem Substrat haftet;
wobei
e. der Chelatbildner an die metallischen Unreinheiten binden kann.

7. Elektrode nach Anspruch 6, wobei die Siliciumpartikel eine Reinheit von mehr als 95 Gewichts-% haben.

8. Elektrode nach Anspruch 6 oder Anspruch 7, wobei die Siliciumpartikel bis zu jeweils 0,2 Gewichts-% einer Unreinheit aufweisen, ausgewählt aus Eisen, Aluminium, Bor, Calcium und Titan.

9. Elektrode nach Anspruch 8, wobei hinsichtlich Chelatbildnern mit einer beliebigen gegebenen Valenz die Konzentration des Chelatbildners ausreichend ist, um die Unreinheiten mit einer entsprechenden Valenz zu binden.

10. Elektrode nach einem der Ansprüche 6 bis 9, wobei das Silicium eine Reinheit von weniger als 99,99 Gewichts-% hat.

11. Elektrode nach einem der Ansprüche 6 bis 10, wobei das Cellulosebindemittel eine anionische Carboxymethylcellulose ist.

12. Elektrode nach einem der Ansprüche 6 bis 10, wobei der Chelatbildner aus einem oder mehreren eines divalenten, trivalenten oder multivalenten Chelatbildners ausgewählt ist.

13. Elektrode nach Anspruch 12, wobei der Chelatbildner ausgewählt ist aus Deferoxaminmesilat, Ethylendiamintetraessigsäure (EDTA) und Natriumhexametaphosphat.

14. Elektrode nach einem der Ansprüche 6 bis 13, des Weiteren umfassend einen elektrisch leitenden Kohlenstoff.

15. Elektrode nach Anspruch 14, wobei der leitende Kohlenstoff metallische Unreinheiten aufweist.

16. Elektrode nach einem der Ansprüche 6 bis 15, wobei das aktive Material 20 bis 100 Gewichts-% Silicium und 0 bis 80 Gewichts-% eines aktiven Kohlenstoffs umfasst.

17. Elektrode nach einem der Ansprüche 6 bis 16, wobei die kohäsive Masse 50 bis 95 Gewichts-% eines aktiven Materials, 5 bis 20 Gewichts-% eines Bindemittels und 10 bis 30 Gewichts-% eines leitenden Kohlenstoffs umfasst.

18. Elektrode nach einem der Ansprüche 6 bis 17, wobei die Siliciumpartikel aus einem oder mehreren von säulenförmigen Partikeln, Pulverpartikeln, Bändern und Fasern ausgewählt sind.

19. Lithiumionen-Akkuzelle, umfassend eine Elektrode nach einem der Ansprüche 6 bis 18.

20. Vorrichtung, umfassend eine Zelle nach Anspruch 19.

## Revendications

1. Procédé de fabrication d'une électrode comprenant les étapes de :
a. fourniture d'un substrat ;
b. fourniture d'une matière active comprenant un silicium particulaire ;
c. mélange d'un agent chélatant avec la matière active comprenant du silicium particulaire ;
d. l'un ou l'autre
(i) du mélange du produit de l'étape (c) comprenant de la matière active et de l'agent chélatant avec un liant de cellulose pour former une masse cohésive ; ou
(ii) de la séparation de la matière active de l'agent chélatant, lavage et séchage de la matière active et ensuite mélange de la matière active avec un liant de cellulose pour former une masse cohésive ; et
e. application de la masse cohésive formée dans étape d(i) ou étape d(ii) au substrat.

2. Procédé selon la revendication 1, dans lequel la matière active comprend en outre une matière conductrice.

3. Procédé selon la revendication 1 ou la revendication 2, dans lequel la matière active comprend une ou des impuretés métalliques.

4. Procédé selon n'importe laquelle des revendications 1 à 3, dans lequel le silicium a une pureté supérieure à 95 % en poids.

5. Procédé selon n'importe laquelle des revendications précédentes, dans lequel le silicium particulaire inclut jusqu'à 0,2 % en poids d'une ou plusieurs impuretés sélectionnées à partir du fer, aluminium, bore, calcium, titane, phosphore, bore, oxygène et carbone.

6. Électrode pour une cellule de batterie rechargeable au lithium-ion comprenant :
a. un substrat ;
b. une matière active comprenant un silicium particulaire et des impuretés métalliques ;
c. un agent chélatant ; et
d. un liant de cellulose, le liant formant avec la matière active et l'agent chélatant une masse cohésive qui adhère au substrat ;
dans lequel
e. l'agent chélatant est susceptible de se lier aux impuretés métalliques.

7. Électrode selon la revendication 6, dans laquelle le silicium particulaire a une pureté supérieure à 95 % en poids.

8. Électrode selon la revendication 6 ou la revendication 7, dans laquelle le silicium particulaire inclut jusqu'à 0,2 % en poids de chacune d'une impureté sélectionnée à partir du fer, aluminium, bore, calcium et titane.

9. Électrode selon la revendication 8, dans laquelle, en ce qui concerne des agents chélatants ayant n'importe quelle valence donnée, la concentration de l'agent chélatant est suffisante pour lier les impuretés qui ont une valence correspondante.

10. Électrode selon n'importe laquelle des revendications 6 à 9, dans laquelle le silicium a une pureté inférieure à 99,99 % en poids.

11. Électrode selon n'importe laquelle des revendications 6 à 10, dans laquelle le liant de cellulose est une carboxyméthylcellulose anionique.

12. Électrode selon n'importe laquelle des revendications 6 à 10, dans laquelle l'agent chélatant est sélectionné à partir d'un ou plusieurs d'un agent chélatant divalent, trivalent ou multivalent.

13. Électrode selon la revendication 12, dans laquelle l'agent chélatant est sélectionné à partir du mésylate de déféroxamine, acide éthylène diamine tétra acétique (EDTA) et hexamétaphosphate de sodium.

14. Électrode selon n'importe laquelle des revendications 6 à 13, qui comprend en outre un carbone électriquement conducteur.

15. Électrode selon la revendication 14, dans laquelle le carbone conducteur inclut des impuretés métalliques.

16. Électrode selon n'importe laquelle des revendications 6 à 15, dans laquelle la matière active comprend de 20 à 100 % en poids de silicium et de 0 à 80 % en poids d'un carbone actif.

17. Électrode selon n'importe laquelle des revendications 6 à 16, dans laquelle la masse cohésive comprend de 50 à 95 % en poids d'une matière active, 5 à 20 % en poids d'un liant et 10 à 30 % en poids d'un carbone conducteur.

18. Électrode selon n'importe laquelle des revendications 6 à 17, dans laquelle le silicium particulaire est sélectionné à partir d'une ou plusieurs particules en colonne, particules en poudre, rubans et fibres.

19. Cellule de batterie rechargeable au lithium-ion comprenant une électrode selon n'importe laquelle des revendications 6 à 18.

20. Dispositif comprenant une cellule selon la revendication 19.
